# EUROPEAN PATENT APPLICATION

(11) **EP 4 738 847 A1**
(43) Date of publication of application: **06.05.2026**
(21) Application number: 24210437.0
(22) Date of filing: 01.11.2024
(51) Int. Cl.: H04N 21/44, G06T 1/00, G09C 5/00, H04N 21/81, H04N 21/8352, H04N 21/8358, H04L 9/08, H04N 21/254, H04N 21/6377

(54) **VISUALLY EMBEDDING AUTHENTICITY PROOF DATA IN VIDEO CONTENT**

(71) Applicant: PlayAI GmbH, 81241 München (DE)
(72) Inventor: Taylor, Samuel, Melbourne (VIC), 3131 (AU); Martin, Anja, 81241 München (DE)
(74) Representative: Best, Bastian

(57) **Abstract**

Authenticity proof data can be visually embedded in a video file or stream. The visual representation of the authenticity proof data is perceivable to users and scannable by user devices for validating the authenticity proof data. This allows for verification of content integrity through direct observation or scanning, enhancing trust and security in digital media distribution.

## Description

### TECHNICAL FIELD

This disclosure relates to the field of digital content protection, specifically to methods and systems for authenticating content, in particular video content. This disclosure also relates to the field of artificial intelligence (Al) and machine learning (ML), specifically to applications where Al-generated content needs to be authenticated.

### BACKGROUND

The proliferation of Artificial Intelligence (Al) generated "deepfake" videos has led to concerns about their authenticity and potential misuse. Al-generated videos are becoming increasingly difficult to distinguish from real-life recordings, making it challenging to distinguish between authentic and manipulated recordings. This compromise can be exploited by malicious actors seeking to disseminate false or misleading information.

When the subject matter involves well-known or recognizable individuals ("very important persons"; VIPs), such as celebrities, athletes, politicians, or business leaders, the lack of robust authentication mechanisms can lead to confusion and misinformation. The absence of authorized or licensed products featuring these VIPs means that consumers have no way of determining if a particular video is an official representation of the person.

Furthermore, with the rise of social media platforms and online sharing, videos are often captured, recorded, and shared without any guarantee of being generated in a controlled environment. This raises concerns about the integrity and authenticity of these videos, as well as their potential impact on public perception and reputation. This undermines trust in video content and creates opportunities for malicious actors to spread disinformation, propaganda, or other forms of malicious activity.

In light of these challenges, there is a need to develop effective techniques that ensure the authenticity and integrity of video content, in particular Al-generated videos, thereby mitigating the security risks associated with their dissemination.

It is therefore an objective of the present disclosure to provide techniques that ensure the authenticity of video content and provide end-consumers with an easy way to verify its legitimacy, thereby overcoming the drawbacks of the prior art at least in part.

### SUMMARY OF THE DISCLOSURE

The above and other objectives may be achieved by the subject-matter defined by the independent claims. Advantageous modifications of embodiments of the present disclosure are defined in the dependent claims as well as in the description and the drawings.

One aspect of the present disclosure provides a video, such as a video file or video stream, and/or a data structure encoding such a video, video file or video stream. The video file or the video stream may comprise video content. Although the aspects and embodiments of the present disclosure will be explained in connection with a video file or a video stream, they can be applied in connection with any data structure configured to store video content. The video file or the video stream may comprise a visual representation of authenticity proof data.

It may be provided that the visual representation of the authenticity proof data is embedded, in particular visually embedded, in the video content. It may be provided that the visual representation of the authenticity proof data is visually perceivable to a user.

Embedding authenticity proof data directly into the video content offers several significant advantages, making it an effective solution for ensuring the authenticity, integrity and legitimacy of digital videos.

Firstly, this approach provides a way to convey the authenticity proof data that is agnostic of where the video is hosted. This means that regardless of whether the video is stored on a social media platform, a website, or a physical device, the embedded authenticity proof remains intact and accessible. The viewer can verify the authenticity of the video without relying on any specific hosting environment or software.

Secondly, this method is not reliant on built-in software. Unlike traditional approaches that require specialized software to detect and authenticate videos, embedding authenticity proof data in the video content itself eliminates the need for additional tools or plugins. This makes it a more accessible and user-friendly solution for verifying video authenticity.

Thirdly, the embedded authenticity proof data is tolerant of being copied and/or transcribed. When a video is shared, recorded, or transcribed, the authenticity proof remains intact, ensuring that the verification process can be applied to any subsequent copies or versions of the original content.

Fourthly, by embedding the authenticity proof data directly into the video content, it becomes an integral part of the video itself. This means that whenever the video is copied, recorded, shared, etc., the digital signature goes with it. The authenticity proof remains linked to the video, ensuring that any attempts to manipulate or alter the original content can be detected and verified.

Lastly, this approach ensures that the embedded authenticity proof data is not lost when the video undergoes compression, re-transmission, or transcription. Since the authenticity proof is part of the video itself, it is not reliant on any particular video codec. This means that even if a video is compressed or transmitted in a different format, the authenticity proof remains intact and accessible.

In summary, data security can be significantly improved by embedding authenticity proof data directly into the video content, thereby ensuring its authenticity, integrity and legitimacy. This approach provides a robust solution for verifying digital videos across various hosting environments, software platforms, and formats, without relying on specialized tools or plugins. By integrating the authentication data within the video itself, it becomes an intrinsic part of the content, allowing it to remain linked to any subsequent copies, recordings, shares, or transcriptions. This ensures that even if a video is copied, recorded, shared, compressed, transmitted, or undergoes transcription, its authenticity proof remains intact and accessible, providing a reliable means for verification. The embedded authentication data also becomes resistant to tampering attempts, as it cannot be separated from the original content, thereby safeguarding against manipulation or alteration of digital videos.

It may be provided that the visual representation of the authenticity proof data is scannable by a user device to validate the authenticity proof data.

Allowing the visual representation of authenticity proof data to be scannable by a user device offers several significant advantages, making it an effective solution for ensuring the integrity and legitimacy of digital videos.

Firstly, this approach provides immediate validation. By presenting the authenticity proof data in a visually recognizable format, users can quickly scan the video and draw an inference that it is from a legitimate source. This immediate visual cue allows users to take the next step towards full validation, such as decoding or verifying the authenticity proof.

Secondly, this feature eliminates the need for additional software or plugins. Unlike traditional approaches that require specialized tools or apps to validate videos, the visual representation of authenticity proof data can be scanned and validated using a user's device without any additional software requirements.

Thirdly, this approach provides enhanced security. By making the authenticity proof data visually recognizable, it becomes more difficult for malicious actors to manipulate or alter the video content without detection. The visual representation serves as an added layer of protection against tampering or forgery.

Fourthly, this feature offers improved user experience. Users can quickly and easily validate the authenticity of a video by scanning the visual representation of the authenticity proof data. This streamlined process reduces friction and makes it more likely that users will take steps to verify the legitimacy of digital videos.

Lastly, this approach enables cross-platform compatibility. The visual representation of authenticity proof data is not limited to any specific device or platform. Users can scan and validate video authenticity using a variety of devices, including smartphones, tablets, laptops, and desktop computers.

It may be provided that the visual representation of the authenticity proof data comprises a user-recognizable graphical element.

A user-recognizable graphical element offers several advantages. Unlike QR codes, which can be confusing and are impossible to remember, this approach provides a simple and memorable graphic that users can easily recall. This makes it easier for them to verify the authenticity of digital videos in the future. Additionally, since the graphical element is designed to be unique and distinctive, it has the potential to become a trademarkable intellectual property, allowing companies to establish brand recognition and differentiate themselves from competitors.

It may be provided that the graphical element comprises a plurality of segments. Each segment of the plurality of segments may be displayed in a color of a color palette.

By segmenting the colors into a structured element, the decoding step becomes much more robust and can be achieved through simple camera-based scanning or browser add-ons that detect color changes. This approach allows for accurate detection even with lower fidelity compared to QR codes, which may not work well in small screen sizes like those found on video players. Additionally, this method enables users to quickly scan the logo using a phone's camera or a browser extension, making it an efficient and practical solution for verifying authenticity.

It may be provided that the color palette is associated with a base color, where each color of the color palette is a shade of the base color.

Associating each color in the palette with a shade of a base color provides several benefits. Firstly, it simplifies the visual representation by using a consistent and recognizable color scheme. This makes it easier to quickly identify specific patterns within the visual representation. Additionally, the use of shades of a single base color creates a cohesive and harmonious visual aesthetic that is more pleasing to the eye than a random selection of colors. Furthermore, this approach can also help to reduce cognitive load and improve the user's visual perception of the video content by reducing the number of distinct colors used in the color palette, making it easier for the user's perceptive system to focus on the video content rather than being distracted by a complex color scheme.

It may be provided that each color of the color palette represents a character in an encoding alphabet.

Associating each color in the color palette with a character in an encoding alphabet provides a powerful and efficient way to represent text-based information within video content, more precisely within the authenticity proof data. This can be particularly useful for representing large amounts of data, such as Base64-encoded strings, which would otherwise be difficult to visualize.

It may be provided that the encoding alphabet comprises, or is, the Base64 alphabet defined in RFC 4648, in particular in Table 1 of RFC 4648 §4.

It may be provided that the colors of the color palette are selected as contrasting colors for common combinations of characters.

Selecting colors for common combinations of characters as contrasting colors may improve scannability by making it easier to quickly identify specific patterns or sequences of characters using cameras on user devices.

It may be provided that the base color and/or the shades of the base color are selected based on a color model. For example, the color model may be the RGB (Red, Green, Blue) color model, more particularly its cylindrical-coordinate representation HSL (Hue, Saturation, Lightness), which allows for particular intuitive selection of a base color. In one example, the hue (H) remains constant to maintain the base color, the saturation (S) is adjusted gradually to generate a range of shades, and the lightness (L) varies to create both lighter and darker shades. Once the color gradients are calculated, color shades 1, 2, 3 and 4 may be chosen as either four lighter or four of the darker shades as all characters in the Base64 encoding alphabet start with hex characters 0, 1, 2 or 3 (i.e., colors 1, 2, 3, 4). This increases the contrast between adjacent segments in the visual representation as the second segment with therefore be a lighter or darker color.

It may be provided that the graphical element is an animated graphical element. In particular, animation may comprise changing the colors of the segments.

An animated graphical element, with its ability to change colors of the segments, offers several advantages. Firstly, it enhances the visual appeal and attention-grabbing nature of the digital signature, making it more noticeable and memorable for users. Secondly, the animation creates a dynamic effect that can help draw the user's eye towards the signature, increasing the chances of successful detection. Additionally, the changing colors provide an added layer of security by making it more difficult to replicate or tamper with the signature, as any attempts would be easily detectable through changes in color patterns. Furthermore, this allows for even more information to be encoded into a sequence of animated graphical elements, enabling the transmission of complex authenticity proof data or even other data such as images, audio files, and text messages.

It may be provided that the authenticity proof data comprises a message. The message may comprise one or more of a video summary, a product name, a version, a date, an instance identifier, a link reference, and/or padding information.

The ability to embed a message within the authenticity proof data offers numerous advantages. For instance, it enables the transmission of metadata that provides context and meaning to the video content, such as a summary or description of what is being shown. Additionally, including a version number or date/time stamp allows for tracking changes and updates to the video content over time, ensuring that recipients have access to the most current and accurate information. Furthermore, embedding an instance identifier can facilitate identification of specific instances or versions of the video content, while link references enable easy navigation to related resources or additional information.

It may be provided that the authenticity proof data comprises a digital signature.

The inclusion of a digital signature in the authenticity proof data provides cryptographic assurance that the video content has not been tampered with or altered since its creation, ensuring the integrity and provenance of the content. This feature also enables verification of the sender's identity, providing an added layer of trust and accountability for the recipient. Furthermore, a digital signature can be used to prevent unauthorized copying or distribution of the video content, as any attempts to modify or replicate it would result in the signature being invalidated. Overall, this feature provides a robust mechanism for ensuring the authenticity and integrity of digital video content.

It may be provided that the authenticity proof data comprises padding and/or error correction information.

The inclusion of padding and/or error correction information in the authenticity proof data allows for efficient transmission and storage of the authenticity proof data, as it can be used to fill any remaining space in a digital container or file format. This feature also enables the use of variable-length encoding schemes, which can reduce the overall size of the authenticity proof data while maintaining its integrity. Additionally, error correction information provides an added layer of robustness against errors that may occur during transmission or storage of the video content and its accompanying authenticity proof data. By incorporating error-correcting codes into the authenticity proof data, any minor corruption or degradation can be detected and corrected, ensuring that the authenticity proof data remains intact and trustworthy. Overall, this feature provides a reliable mechanism for verifying the integrity and provenance of digital video content.

It may be provided that the video content comprises Al-generated video content, in particular an avatar of a real-world person, such as a real-world athlete.

The inclusion of Al-generated video content, specifically an avatar of a real-world athlete, in the video content offers several advantages. Avatars can be used to create realistic and engaging digital representations of individuals, allowing for a new level of authenticity and immersion in the video content. This feature enables the creation of personalized videos that mimic real-life interactions between people, which can be particularly useful in applications such as entertainment, education, or marketing.

The use of avatars also opens up possibilities for creating virtual influencers, digital celebrities, or even chatbots that can interact with humans in a more natural and human-like way. This feature has the potential to revolutionize industries such as advertising, social media, and customer service by providing personalized interactions that are both engaging and efficient.

Furthermore, Al-generated video content can be used to create realistic simulations of real-world events or scenarios, allowing for training exercises, educational programs, or even entertainment purposes. The possibilities are endless, and this feature has the potential to transform various industries in ways we cannot yet fully imagine.

Overall, the inclusion of AI-generated video content, specifically an avatar of a real-world athlete, is a game-changer that can open up new opportunities for creative expression, education, marketing, and beyond.

Methods of creating an avatar of a real-world athlete are described in European patent application no. EP24165487.0 titled "ARTIFICIALLY INTELLIGENT AVATARS OF REAL-WORLD ATHLETES", the content of which is incorporated by reference herein in its entirety.

It may be provided that the plurality of segments consists of (exactly) eight segments. The encoding alphabet may be the hexadecimal alphabet. It may be provided that each segment pair encodes a Base64 character using two hexadecimal values. The encoding alphabet being the hexadecimal alphabet means that each color in the color palette corresponds to one hexadecimal value selected from 0-9 and A-F.

This allows for efficient encoding of data within each segment, enabling the storage and transmission of large amounts of information in a compact format. The use of hexadecimal values provides a high degree of precision and accuracy, making it ideal for applications where data integrity is crucial. Additionally, this feature enables the creation of unique digital signatures that can be used to verify the authenticity of Al-generated video content, providing an added layer of security against tampering or manipulation. Overall, this feature offers a powerful tool for ensuring the integrity and legitimacy of AI-generated video content in various industries and applications.

According to another aspect of the present disclosure, there is provided a method of encoding authenticity proof data in a video file or video stream, in particular a video file or video stream according to any of the aspects disclosed herein. The method may comprise obtaining a visual representation of the authenticity proof data. The method may comprise visually embedding the visual representation of the authenticity proof data into video content of the video file or the video stream.

According to another aspect of the present disclosure, there is provided a method of decoding authenticity proof data encoded in a video file or video stream, in particular a video file or video stream according to any of the aspects disclosed herein. The method may comprise observing a visual representation of the authenticity proof data visually embedded in video content of the video file or the video stream. The method may comprise validating the authenticity proof data.

Another aspect of the present disclosure relates to a data processing apparatus. The data processing apparatus may comprise means for carrying out a method according to any one of the aspects described herein. Another aspect of the present disclosure relates to a data processing apparatus comprising a memory and one or more processors coupled to the memory, the one or more processors being configured to carry out any of the methods described herein. A data processing apparatus may comprise any kind of data processing hardware and may encompass all kinds of apparatus, devices, and machines for processing data, including by way of example a programmable processor, a computer, or multiple processors or computers.

Another aspect of the present disclosure relates to a computer program. Another aspect of the present disclosure relates to a computer-readable medium having stored thereon a computer program. The computer program may comprise instructions which, when the program is executed by a computer, cause the computer to carry out a method according to any one of the aspects described herein. A computer program may also be referred to as a program, software, a software application, an app, a module, a software module, a script, or code. A computer program may be written in a programming language, including compiled or interpreted languages. A computer program may be deployed in any form, including as a stand-alone product or as a module, component, subroutine, or other unit suitable for use in a computing environment.

Another aspect of the present disclosure relates to a non-transitory computer-readable medium storing a set of instructions that, when executed by one or more processors of an apparatus, cause the apparatus to carry out any of the methods described herein.

The terms used herein should generally be construed as understood by the average person skilled in the art, unless explicitly indicated otherwise. The following explanations may guide the understanding:

The term "Artificial intelligence" (Al) may be understood as referring to a branch of computer science that aims to develop machines or software capable of intelligent behavior, typically with the goal to mirror or surpass human intelligence in specific tasks. Al systems are designed to perform complex tasks such as reasoning, learning, perception, problem solving, and understanding natural language. These systems can typically adapt to new situations and improve their performance over time. The goal of AI is to create systems that can function autonomously and interact with their environment in a human-like manner.

The term "Artificial neural network" (ANN), or "neural network" (NN) in short, may be understood as a machine-learning or deep-learning model or algorithm. Neural networks are generally inspired by the human brain and typically comprise interconnected nodes or neurons organized into layers. Neural networks can be used to process data and learn from examples, enabling them to perform tasks such as image recognition, natural language processing, and more. A neural network typically comprises an input layer, one or more hidden layers, and an output layer. Through a process called training, neural networks can learn to perform specific tasks by adjusting their internal parameters, or "weights", based on labeled or unlabeled data.

The term "Authenticity proof data" may be understood as information that can be used to verify the authenticity and/or integrity of a video file, video stream and/or video content. Authenticity proof data may include a digital signature.

The term "Avatar" may be understood as a virtual or digital representation of a person, the person's character, and/or persona. An avatar may comprise a graphical representation, in particular in the form of a three-dimensional model. An avatar may be usable in digital worlds, video games, as well as other online settings including social media, virtual assistants, and instant messaging platforms.

The term "Digital signature" may be understood as a cryptographic technique used to validate the authenticity and integrity of a digital message, which may comprise a document, video file, video stream, or the like. A digital signature serves as the digital equivalent of a handwritten signature or stamped seal, providing a higher level of security against tampering and impersonation. Digital signatures create a unique virtual fingerprint for the signer, ensuring that the document has not been altered since it was signed and confirming the identity of the signer. In other words, key characteristics of a digital signature include:
- Authenticity: A valid digital signature assures the recipient that the message originated from a known sender.
- Integrity: A valid digital signature guarantees that the content has not been modified in transit; any alteration will invalidate the signature.
- Non-repudiation: A valid digital signature provides evidence that the signer cannot deny their association with the signed document.

Digital signatures typically utilize public key cryptography, involving two keys: a private key used for signing and a public key for verification. The signing process performed by the sender typically comprises creating a hash of the message, which is then encrypted using the signer's private key. The verification process performed by the recipient typically comprises decrypting the digital signature with the public key and comparing it to the recipient's own hash of the message. If both hashes match, this confirms both authenticity and integrity.

The term "Large language model" (LLM) may be understood as referring to a type of machine-learning model that has been trained to recognize, generate, translate, and/or summarize vast quantities of written human language and textual data. LLMs are notable for their ability to achieve general-purpose language generation. LLMs comprise a large number of parameters, typically in the millions or often billions of parameters, which enable them to capture a wide array of linguistic nuances, patterns, and contexts.

The term "Machine learning" (ML) may be understood as a subset of artificial intelligence that focuses on the development of algorithms and statistical models that enable computers to perform specific tasks without using explicit instructions. Instead, machine-learning systems learn and make predictions or decisions based on data. Machine-learning algorithms build a mathematical model based on sample data, known as training data, to make predictions or decisions without being explicitly programmed to perform the task. Machine learning can be employed in a variety of applications, including image and speech recognition, medical diagnosis, predictive analytics, and many more, where it enables systems to learn from and adapt to new data independently.

The term "Machine-learning algorithm" may be understood as a computational procedure that is designed to analyze data, learn from it, and identify patterns or make decisions based on the input data without being explicitly programmed for the task. Machine-learning algorithms leverage statistical techniques to enable systems to improve their performance on a specific task with more data over time. Machine-learning algorithms are the foundation upon which machine-learning models are built, providing the methods or processes through which data is transformed into actionable insight. Examples of machine-learning algorithms include linear regression, decision trees, support vector machines, and neural networks, among others.

The term "Machine-learning model" may be understood as referring to the output generated when a machine-learning algorithm is trained on a dataset. It represents the knowledge or understanding gained by the algorithm from the data, encapsulating the learned patterns or predictions. Essentially, a machine-learning model is what enables predictions or decisions based on new, unseen data, based on the learning it has derived from the training process. The machine-learning model is typically defined by its parameters, which may be adjusted during the training phase to minimize the difference between the predicted outcome and the actual outcome. Although, strictly speaking, "machine-learning algorithm" and "machine-learning model" have distinct definitions, it is not uncommon for these terms to be used interchangeably in casual discourse. This usage stems from the close relationship between algorithms and models in the workflow of machine-learning projects, where the algorithm is the means of creating the model. Therefore, these terms may be used synonymously herein unless the distinction is decisive.

The term "Real-world athlete", or "athlete" in short may be understood as a person engaged in a particular kind of sport, such as cricket, soccer, basketball, American football, baseball, or the like. The athlete may be professional athlete.

The term "Training" may be understood as referring to the process of teaching a machine-learning model to make predictions or decisions, by exposing it to data for which the outcomes are known. The training process typically involves feeding a training dataset into a machine-learning algorithm, which then uses statistical analysis to learn the patterns or relationships within the data. During training, the algorithm iteratively adjusts the parameters of the model to minimize the difference between the predicted outcomes and the actual outcomes in the training data. This adjustment process is typically guided by a loss function, which measures the accuracy of the model's predictions. The goal of training is to produce a model that accurately represents the underlying structure of the data, enabling it to make reliable predictions about new, unseen data. Supervised learning involves training a model on a labeled dataset, where each example in the training data is paired with the correct output. The model learns to predict the output from the input data. Unsupervised learning involves training a model on data without labeled responses. The model tries to find patterns and relationships in the data on its own. Semi-supervised learning combines both labeled and unlabeled data during the training process, which can be beneficial when acquiring a fully labeled dataset is costly or impractical.

The term "Video content" may be understood as the actual information conveyed through video data, typically including visual elements such as scenes, characters, objects, and text, as well as audio components like dialogue and sound effects. Video content can be categorized into different genres or formats, such as movies, television shows, live broadcasts, or user-generated videos.

The term "Video data" may be understood as a digital representation of video content captured in a sequence of images, commonly organized into frames. Each frame comprises pixels that encode the video content, which may include colors, brightness, and other attributes derived from electromagnetic signals captured by imaging sensors. Video data can be processed for various applications, including compression, analysis, and transmission, and is characterized by its spatiotemporal nature, comprising both spatial dimensions (width and height of each frame) and a temporal dimension (the sequence order of frames).

The term "Video file" may be understood as a self-contained representation of Video data. A video file is typically stored on a storage device (e.g., hard drive, solid-state drive) or transmitted over a network as a single entity. Video files are often encoded using compression formats, such as MP4, AVI, and MOV, which facilitate efficient storage and transmission while maintaining quality. Additionally, a video file may include metadata that provides contextual information about the video content, enhancing its usability in various applications.

The term "Video stream" may be understood as a continuous sequence of Video data that can be processed and displayed in real-time. A video stream is typically generated by capturing live video from a camera or other source, or by decoding a stored video file (such as a movie). Video streams are often transmitted over networks using protocols like RTP (Real-Time Protocol) or HLS (HTTP Live Streaming).

The term "Visual representation" may be understood as visually perceivable content which is integrated or embedded directly into the video content itself, rather than being a separate, external element. When content is described as "visually embedded in the video content," it means that specific information or elements are integrated directly into the visual frames of the video file or video stream itself. A visual representation can include various types of data, such as logos, watermarks, text overlays, or other graphical elements that are part of the video imagery.

### BRIEF DESCRIPTION OF THE DRAWINGS

The present disclosure may be better understood by reference to the following drawings:
FIG. 1 illustrates a schematic overview of a system in which embodiments of the present disclosure can be practiced.
FIG. 2 illustrates a schematic block diagram of a video in accordance with one embodiment.
FIG. 3 illustrates a schematic view of a visual representation of authenticity proof data in accordance with one embodiment.
FIG. 4 illustrates an example data format of authenticity proof data in accordance with one embodiment.
FIG. 5 illustrates a schematic block diagram of an exemplary implementation of aspects of the subject matter in accordance with one embodiment.
FIG. 6 illustrates a flowchart of a method of encoding authenticity proof data in a video file or video stream in accordance with one embodiment.
FIG. 7 illustrates a flowchart of a method of decoding authenticity proof data encoded in a video file or video stream in accordance with one embodiment.
FIG. 8 illustrates a schematic view of a visual representation of authenticity proof data in accordance with one embodiment.
FIG. 9 illustrates a schematic view of a visual representation of authenticity proof data in accordance with one embodiment.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

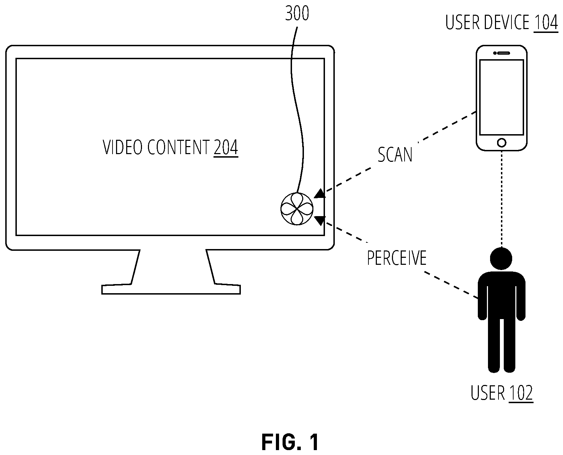

FIG. 1 illustrates a schematic overview of a system in which embodiments of the present disclosure can be practiced. The system comprises a user 102, a user device 104, and a video content 204 displayed on a display device. The video content 204 may be a video file, video stream, or the like. A visual representation 300 of authenticity proof data 206 is visually embedded in the video content 204. The visual representation 300 of the authenticity proof data 206 is visually perceivable to the user 102, as indicated by the dashed arrow labelled "Perceive". The visual representation 300 of the authenticity proof data 206 is scannable by the user device 104, as indicated by the dashed arrow labelled "Scan", to validate the authenticity proof data 206. In one embodiment, the visual representation 300 is rendered as part of the output video content 204 when the video content 204 is generated. In another embodiment, the visual representation 300 is rendered as part of the output video content 204 by overlaying it on a previously generated video. Either way, the visual representation 300 is part of the video content 204 when it is delivered to the end user 102. The visual representation 300 may be arranged in the upper layer of the video content 204 so that it is always visible. In the embodiment shown in FIG. 1, the visual representation 300 is always arranged in the bottom right corner of the video content 204, but other placements may be provided depending on the circumstances.

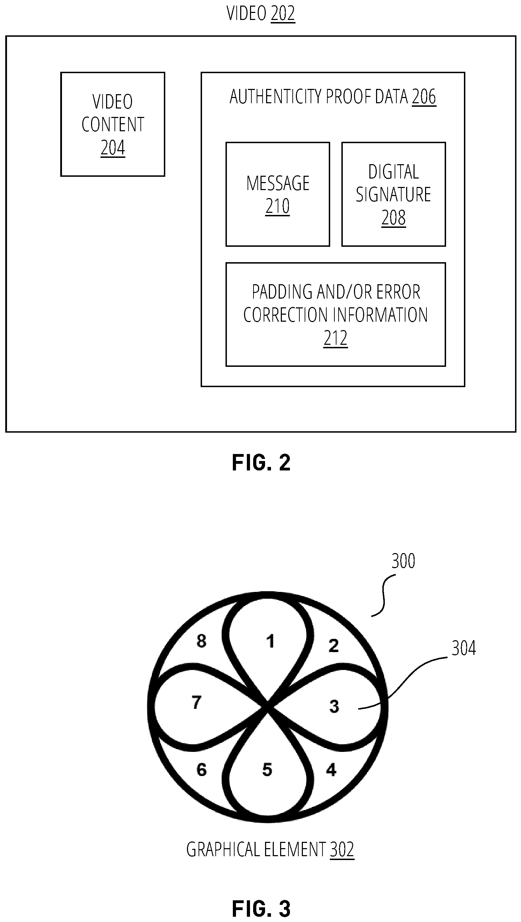

FIG. 2 illustrates a schematic block diagram of a video 202 in accordance with one embodiment. The video 202 is an example of a video file or video stream. The video 202 comprises video content 204 and authenticity proof data 206. In the illustrated embodiment, the authenticity proof data 206 comprises a digital signature 208, a message 210, and padding and/or error correction information 212. In other embodiments, the authenticity proof data 206 may comprise a subset of these components as needed.

Generally, the visual representation 300 of the authenticity proof data 206 may comprise a user-recognizable graphical element 302. FIG. 3 illustrates a schematic view of such a visual representation 300 in accordance with one embodiment. As can be seen, the graphical element 302 comprises a plurality of segments 304.

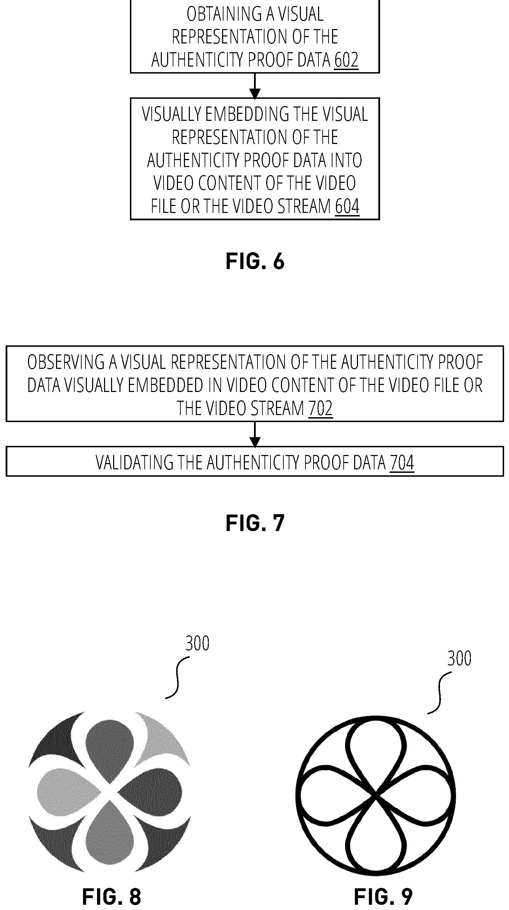

Generally, each segment 304 may be displayed in a color of a color palette. FIG. 8 illustrates an example of a colored visual representation 300 of authenticity proof data 206 according to one embodiment. Each color of the color palette may represent a character in an encoding alphabet. The color palette may be associated with a base color, and each color of the color palette may be a shade of the base color. The colors of the color palette may be selected as contrasting colors for common combinations of characters.

In the specific embodiment illustrated in FIG. 3, the graphical element 302 consists of exactly eight segments 304 which are numbered "1" to "8" in FIG. 3. Note that the numbers do not form part of the graphical element 302 but merely serve to identify each segment 304 for the purposes of this description. FIG. 9 illustrates a graphical element 302 without the numbers. In the embodiment illustrated in FIG. 3, the encoding alphabet is the hexadecimal alphabet, and thus each of the segments 304 of the graphical element 302 is colored using one of 16 colors, in particular 16 shades of a base color.

The following table lists color shades and corresponding hex characters according to one exemplary embodiment. In the example, the base color has a Hue of 200 (Blue) with 80% saturation and 50% lightness, which translates to Hex color #3399CC. It should be understood that the illustrated color values are just examples.

| **No.** | **Color Shade** | **Hex Character** |
|---|---|---|
| 1 | #45bbeb | 0 |
| 2 | #3cb7d2 | 1 |
| 3 | #2db0a6 | 2 |
| 4 | #f1f9ff | 3 |
| 5 | #0aa1dd | 4 |
| 6 | #acdbf9 | 5 |
| 7 | #7cb4d6 | 6 |
| 8 | #546c9e | 7 |
| 9 | #0a8f9d | 8 |
| 10 | #c9dfe7 | 9 |
| 11 | #31435f | A |
| 12 | #37479a | B |
| 13 | #21467d | C |
| 14 | #213d8b | D |
| 15 | #048ad2 | E |
| 16 | #86d0f8 | F |

In one embodiment, to encode data, two adjacent segments 304 are used to represent two hex characters in Base64 encoding. This improves scannability by avoiding common combinations of colors that may result in similar-looking logos when displayed side-by-side. A color mapping such as the one in the table above may be employed to select contrasting colors for these combinations.

Generally, the graphical element 302 may be an animated graphical element, wherein the animation may comprise changing the colors of the segments 304. In one exemplary embodiment, the graphical element 302 remains consistent across at least two video frames, creating a color cycle that allows the data to be reliably extracted from subsequent frames. This enables secure and efficient transmission and/or storage of information using an otherwise innocuous-looking logo as a carrier signal.

In one example, the text "Play" is encoded into the graphical element 302 as 0F, 25, 1A, 32 in Base64 hex notation using the Base64 alphabet defined in RFC 4648 which contains characters A-Z, a-z, 0-9, "+" and "/" ("P" is at Base64 alphabet index 15 which translates to 0F in hex notation, "I" is at Base64 alphabet index 37 which translates to 25 in hex notation, "a" is at Base64 alphabet index 26 which translates to 1A in hex notation, and "y" is at Base64 alphabet index 50 which translates to 32 in hex notation). The resulting four hex notation elements 0F, 25, 1A and 32 break down to the hex value sequence, 0, F, 2, 5, 1, A, 3, 2, which in turn translates to the colors no. 1, 16, 3, 6, 2, 11, 4, 3 in the above table of color shades, which are the colors of the segments 304 numbered 1 to 8 in the graphical element 302 illustrated in FIG. 3. While this example uses specific exemplary color values, table indexes and segment positions, the person skilled in the art will readily appreciate that the concepts behind these encodings may readily be used for all other color values, table indexes and segment positions, as needed.

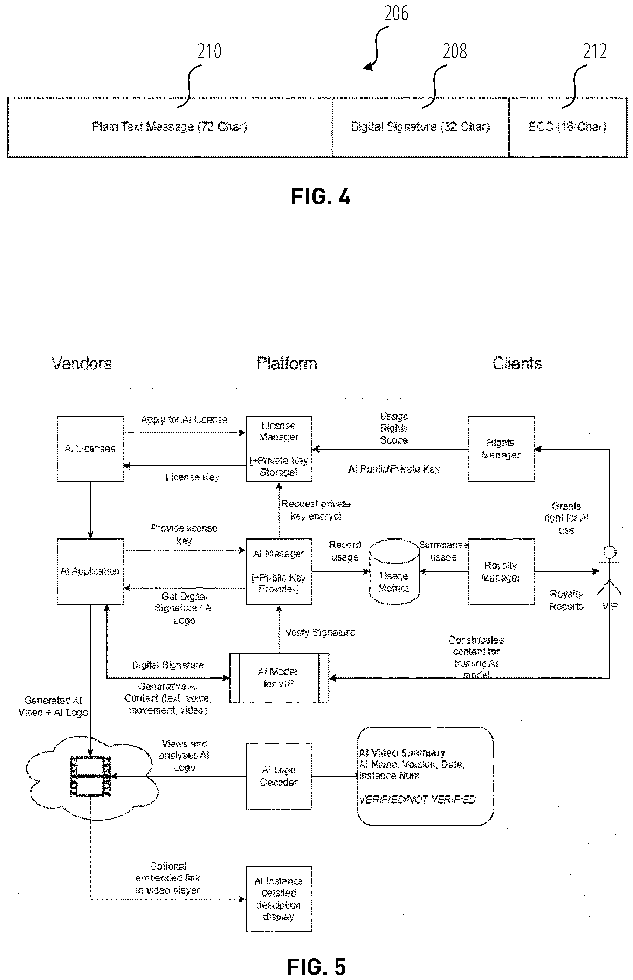

FIG. 4 illustrates an example data format of authenticity proof data 206 in accordance with one embodiment. In the illustrated embodiment, the authenticity proof data 206 comprises a message 210, a digital signature 208, and a padding and/or error correction information 212. In other embodiments, the authenticity proof data 206 may comprise a subset of these components, in particular, the padding and/or error correction information 212 may be omitted in certain embodiments. The authenticity proof data 206 in the illustrated embodiment consists of 120 characters, i.e., 240 hex values, as follows:
- 72 characters for the plain text message 210
- 32 characters for the digital signature 208
- 16 characters for the padding and/or error correction information 212

Generally, the message 210 may comprise one or more of a video summary, a product name, a version, a date, an instance identifier, a link reference, padding information, or any combination thereof.

In one specific example, the video content 204 is generated by artificial intelligence (AI), i.e., it is AI-generated video content 204. In the example, the AI-generated video content 204 includes an avatar of a real-world athlete or other real-world person (a VIP). In this example, the message 210 may comprise:
- AI Name (25 characters): e.g., name of the VIP
- Product Name (10 characters): Avatar
- Version (5 characters): 1.252
- Date of instantiation (16 characters): 2025-03-21 17:22
- Instance Number (4 characters): 1072
- Link Reference (10 Characters): H8DVAPEMZY
- Padding (2 characters)

FIG. 5 illustrates a schematic block diagram of an exemplary implementation of aspects of the subject matter in accordance with one embodiment. The example implementation represents a system for verifying authenticity and provedence of an AI-generated video with an avatar of a real-world athlete or other real-world person, hereinafter referred to as "VIP", which will now be described.

The system operates on the precondition that the rights to generate AI content, such as video 202, for the VIP have been obtained, and the system or the VIP possesses a public key and a private key (hereinafter referred to as the "AI instance Public/Private key"). Another assumption is that the primary method of instantiating the AI is through rendering a generated video file or video stream, which may be hosted within a third-party system over which the owner of the AI has no control.

In the discussed embodiment, every AI-generated video 202 will contain a visual representation 300 of authenticity proof data 206 in the form of a graphical element 302, in the following also referred to as "AI Logo", that is designed to have multiple segments 304 and can be trademarked. Each segment 304 of the AI Logo consists of a potentially different shade of a base color and each segment 304 represents a different position in a text string. The particular shade of color represents a different value within hexadecimal alphabet. The shade of color within each segment 304 changes multiple times per second, thereby allowing long hexadecimal strings of characters to be embedded in a short amount of time.

An exemplary workflow through the above-mentioned implementation will now be described:
1. For every AI instance there is a public/private encryption key. Private keys are securely stored in the "License System".
2. The VIP approves the use of the AI in different markets and product usage which creates a "Usage Rights Scope" via the Rights Manager.
3. An "AI Licensee" wants to create a generative AI video product based on that VIP, and they are granted a license.
4. The "AI application" uses the license key to request a digital signature 208 and AI Logo data periodically (e.g., every minute, hour, or day). At the time of the request a "Usage Record" is also saved.
5. The digital signature 208 can then be used to access the AI Model for the VIP.
6. The AI Logo data may comprise or consists of (also see the exemplary data format in FIG. 4) a live video stream of the animated logo, or a color sequence used to embed/animate the logo, or a hex string representing the data that needs to be encoded.
7. The AI Logo is displayed/embedded in the generated AI video.
8. An end user 102 can use their phone or other user device 104 to scan the AI Logo and via the color changes within the logo extract data that will allow information about the AI to be displayed and have it authenticated. The user 102 also sees the logo and knows that the video is AI-generated and because the logo is trademarked in certain embodiments, it has an immediate recognition and allows the assumption that it comes from a trusted source. Additionally or alternatively, a browser and/or video player add-on may also be used to verify the AI Logo.

FIG. 6 illustrates a flowchart of a method of encoding authenticity proof data 206 in a video file or video stream in accordance with one embodiment.

The method may comprise a method step 602 of obtaining a visual representation 300 of the authenticity proof data 206. This may comprise hashing the plain text message 210 of the authenticity proof data 206, encrypting the resulting hash with the AI Private Key (see FIG. 5), encoding both the original plaintext message 210 and the encrypted digital signature 208 into Base64 format, and converting them to hex strings.

The method may also comprise a method step 604 of visually embedding the visual representation 300 of the authenticity proof data 206 into video content 204 of the video file or the video stream.

FIG. 7 illustrates a flowchart of a method of decoding authenticity proof data 206 encoded in a video file or video stream in accordance with one embodiment.

The method may comprise a method step 702 of observing a visual representation 300 of the authenticity proof data 206 visually embedded in video content 204 of the video file or the video stream. The visual representation 300 can be observed both by a user 102 and by a user device 104, e.g., by being scanned with a camera of the user device 104.

The method may also comprise a method step 704 of validating the authenticity proof data 206. For example, to verify the authenticity of the message 210, the end user 102 or application may decrypt the digital signature 208 using the corresponding public key (see FIG. 5). The decrypted digital signature 208 may then be hashed again to obtain an original hash value. If this obtained hash matches the expected original hash (i.e., the one stored with the encrypted digital signature 208), it confirms that the plaintext message 210 has not been tampered with during transmission. This verification process ensures the authenticity and integrity of the transmitted data, providing a secure means for ensuring trust in the content being conveyed.

FIG. 8 illustrates a schematic view of a visual representation 300 of authenticity proof data 206 in accordance with one embodiment.

FIG. 9 illustrates another schematic view of a visual representation 300 of authenticity proof data 206 in accordance with one embodiment.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more Processors and one or more storage devices or may be a distributed computer system (e.g., a cloud computing system with one or more Processors and one or more storage devices distributed at various locations, for example, at a local client and/or one or more remote server farms and/or data centers). The computer system may comprise any circuit or combination of circuits. In one embodiment, the computer system may include one or more Processors which can be of any type. As used herein, Processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics Processor, a digital signal Processor (DSP), multiple core Processor, a field programmable gate array (FPGA), or any other type of Processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more Memory elements suitable to the particular application, such as a main Memory in the form of random access Memory (RAM), one or more hard drives, and/or one or more drives that handle removable media such as compact disks (CD), flash Memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a Processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH Memory, having electronically readable control signals stored thereon, which cooperate (or are capable of cooperating) with a programmable computer system such that the respective method is performed. Therefore, the digital storage medium may be computer readable.

Some embodiments comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise a computer program for performing one of the methods described herein, stored on a machine-readable carrier.

A further embodiment is a computer program having a program code for performing one of the methods described herein, when the computer program runs on a computer.

A further embodiment is a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory.

A further embodiment is an apparatus as described herein comprising a processor and the storage medium.

A further embodiment is a data stream or a sequence of signals representing the computer program for performing one of the methods described herein. The data stream or the sequence of signals may, for example, be configured to be transferred via a data communication connection, for example, via the internet.

A further embodiment is a processing means, for example, a computer or a programmable logic device, configured to, or adapted to, perform one of the methods described herein.

A further embodiment is a computer having installed thereon the computer program for performing one of the methods described herein.

A further embodiment is an apparatus or a system configured to transfer (e.g., electronically or optically) a computer program for performing one of the methods described herein to a receiver. The receiver may, for example, comprise a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

102 user
104 user device
202 video
204 video content
206 authenticity proof data
208 digital signature
210 message
212 padding and/or error correction information
300 visual representation
302 graphical element
304 segment
602 method step
604 method step
702 method step
704 method step

## Claims

1. A video file or video stream comprising:
video content; and
a visual representation of authenticity proof data visually embedded in the video content;
wherein the visual representation of the authenticity proof data is visually perceivable to a user; and
wherein the visual representation of the authenticity proof data is scannable by a user device to validate the authenticity proof data.

2. The video file or the video stream of claim 1, wherein the visual representation of the authenticity proof data comprises a user-recognizable graphical element.

3. The video file or the video stream of claim 2, wherein the graphical element comprises a plurality of segments, wherein each segment of the plurality of segments is displayed in a color of a color palette.

4. The video file or the video stream of claim 3, wherein the color palette is associated with a base color, and wherein each color of the color palette is a shade of the base color.

5. The video file or the video stream of claim 3 or 4, wherein each color of the color palette represents a character in an encoding alphabet.

6. The video file or the video stream of claim 5, wherein the colors of the color palette are selected as contrasting colors for common combinations of characters.

7. The video file or the video stream of any one of claims 2 to 6, wherein the graphical element is an animated graphical element, wherein the animation comprises changing the colors of the segments.

8. The video file or the video stream of any one of claims 1 to 7, wherein the authenticity proof data comprises a message;
wherein the message comprises one or more of:
a video summary;
a product name;
a version;
a date;
an instance identifier;
a link reference;
padding information.

9. The video file or the video stream of any one of claims 1 to 8, wherein the authenticity proof data comprises a digital signature.

10. The video file or the video stream of any one of claims 5 to 9, wherein:
the video content comprises AI-generated video content, in particular an avatar of a real-world athlete;
the plurality of segments consists of eight segments;
the encoding alphabet is the hexadecimal alphabet.

11. The video file or the video stream of claim 10, wherein each segment pair encodes a Base64 character using two hexadecimal values.

12. A method of encoding authenticity proof data in a video file or video stream according to any one of claims 1 to 11, the method comprising:
obtaining a visual representation of the authenticity proof data; and
visually embedding the visual representation of the authenticity proof data into video content of the video file or the video stream.

13. A method of decoding authenticity proof data encoded in a video file or video stream according to any one of claims 1 to 11, the method comprising:
observing a visual representation of the authenticity proof data visually embedded in video content of the video file or the video stream; and
validating the authenticity proof data.

14. A data processing apparatus comprising means for carrying out the method of claim 12 and/or claim 13.

15. A computer program, or a computer-readable medium storing a computer program, the computer program comprising instructions which, when the program is executed by a computer, cause the computer to carry out the method of claim 12 and/or claim 13.
